# EUROPEAN PATENT APPLICATION

(11) **EP 4 851 620 A1**
(43) Date of publication of application: **09.12.2026**
(21) Application number: 24921961.9
(22) Date of filing: 18.11.2024
(51) Int. Cl.: G01N 29/265, G21C 17/013

(54) **INSPECTION DEVICE, INSPECTION SYSTEM, AND INSPECTION METHOD**

(30) Priority: 31.01.2024 JP 2024012762
(71) Applicant: IHI Corporation, Koto-ku Tokyo 135-8710 (JP)
(72) Inventor: SHIINA, Eisuke, Tokyo 135-8710 (JP)
(74) Representative: Marks & Clerk LLP
(86) International application number: PCT/JP2024/040829
(87) International publication number: WO 2025/164042

(57) **Abstract**

Appropriately inspect an inspection target. [Solution] An inspection device (110) is to be placed between an inner vessel (210) and an outer vessel (220) of a double vessel, wherein the inner vessel (210) and the outer vessel (220) partly have a cylindrical shape. The inspection device (110) includes an inspection unit (114) that inspects the inner vessel (210) as a target, a main body (111) that is provided with a wheel (1110a) to travel, and an arm (112, 113) that includes a radial limiter (1121) for limiting movement of the main body (111) in a radial direction of the double vessel. Under a state in which a surface of the main body (111) is in contact with a vertical upper surface of a guide (120) extending in a circumferential direction of the outer vessel (220), the inspection device (110) travels in the circumferential direction on an inner surface of the outer vessel (220).

## Description

### Technical Field

The present disclosure relates to an inspection device, an inspection system, and an inspection method. This application claims the benefit of priority to Japanese Patent Application No. 2024-12762 filed on January 31, 2024, and contents thereof are incorporated in this application.

### Background Art

A pressure vessel used in a plant such as a nuclear power plant or a chemical plant is formed of an annular metal plate. For example, some pressure vessels have a double structure including an inner vessel including a body portion in which steel plates are stacked in a vertical direction and boundaries thereof are joined by welding, and an outer vessel surrounding the inner vessel. An inspection targeting a welded joint of the inner vessel is periodically performed because the welded joint that is a boundary between welded metal plates is more liable to be damaged due to stress concentration as compared to a non-welded portion.

The inspection targeting the welded joint of the inner vessel is performed by remotely operating an inspection device including a sensor and placing the inspection device at an inspection location. For example, in the technology as described in Patent Literature 1, a marker is permanently installed on the welded joint of the inner vessel, and the inspection device travels on a surface of the inner vessel through use of the marker as a guide. The inspection device performs an ultrasonic flaw detection inspection on the welded joint of the inner vessel while traveling on the surface of the inner vessel.

Further, in the technology as described in Patent Literature 2, a track processed to have a rack gear is placed along the welded joint of the inner vessel. With the rack gear and a pinion gear of the inspection device being engaged with each other, the inspection device performs an ultrasonic flaw detection inspection on the welded joint of the inner vessel while traveling on the surface of the inner vessel.

### Citation List

### Patent Literature

Patent Literature 1: JP H4-290996 A
Patent Literature 2: JP 1614782 B

### Summary

### Technical Problem

However, in the technology of Patent Literature 1, there has been a problem in that the inspection device deviates from a horizontal travel line along the welded joint because the inspection device is affected by gravity when the inspection device travels in a horizontal direction along the welded joint. Accordingly, there has been a need to perform control of correcting the travel line of the inspection device or perform an inspection in consideration in advance of deviation of the inspection device from the travel line.

In the technology as described in Patent Literature 2, there has been a need to engage the rack gear and the pinion gear of the inspection device with each other, and it has been difficult to install and remove the inspection device by remote operation. Accordingly, an operator has had to perform installation and removal of the inspection device, and hence the inspection device is not suitable for an inspection targeting a pressure vessel that may be in a high-temperature, high-radiation, and narrow environment.

In view of the above, the present disclosure aims to provide an inspection device, an inspection system, and an inspection method which are capable of appropriately inspecting an inspection target.

### Solution to Problem

According to one aspect of the present disclosure, there is provided an inspection device to be placed between an inner vessel and an outer vessel of a double vessel, the inner vessel and the outer vessel partly having a cylindrical shape, the inspection device including an inspection unit that inspects the inner vessel as a target, a main body that is provided with a wheel to travel, and an arm that includes a radial limiter for limiting movement of the main body in a radial direction of the double vessel. Under a state in which a surface of the main body is in contact with a vertical upper surface of a guide extending in a circumferential direction of the outer vessel, the inspection device travels in the circumferential direction on an inner surface of the outer vessel.

The arm may include a first arm extending from the main body toward the inner vessel, and a second arm connected to the first arm, the second arm being provided with the inspection unit such that the inspection unit is movable in a vertical direction.

The first arm may limit the movement of the main body in the radial direction of the double vessel by pressing the second arm against an outer surface of the inner vessel.

The first arm may include an elastic body, and a limit on the movement of the main body in the radial direction of the double vessel may be canceled by an elastic force based on the elastic body.

The inspection device may further include a position controller that controls the inspection device to a start position of an inspection. The position controller may detect an index representing a reference position provided on the guide, and may identify the reference position as a position of the inspection device in the double vessel.

At least one gap may be formed in the guide extending in the circumferential direction of the outer vessel, and the gap may have a length that does not interfere with travel of the inspection device in the circumferential direction.

According to one aspect of the present disclosure, there is provided an inspection system, and the inspection system may include the inspection device, the guide extending in the circumferential direction in the outer vessel of the double vessel, and a controller that controls the inspection device.

According to one aspect of the present disclosure, there is provided an inspection method using an inspection device to be placed between an inner vessel and an outer vessel of a double vessel, the inner vessel and the outer vessel partly having a cylindrical shape, the inspection device including an inspection unit that inspects the inner vessel as a target, a main body that is provided with a wheel to travel, and an arm that includes a radial limiter for limiting movement of the main body in a radial direction of the double vessel, the inspection method including the processes of suspending the inspection device to place the inspection device such that a surface of the main body is in contact with a vertical upper surface of a guide extending in a circumferential direction of the outer vessel, limiting movement of the inspection device in the radial direction of the double vessel by operating the radial limiter, causing the inspection device to travel in the circumferential direction of the double vessel by driving the wheel, performing an inspection on the inner vessel as the target, and stopping the radial limiter to lift the inspection device.

Under a state in which the inspection device is in contact with the guide, vertically downward movement of the inspection device may be limited, but vertically upward movement of the inspection device may be free of being limited.

### Advantageous Effects of Invention

According to the present disclosure, it is possible to appropriately inspect the inspection target.

### Brief Description of Drawings

FIG. 1 is a perspective view for illustrating a pressure vessel being an inspection target.
FIG. 2 is a view for illustrating a schematic relationship between devices forming an inspection system.
FIG. 3 is a perspective view for illustrating an inspection device.
FIG. 4A is a schematic view for illustrating an arm in a state in which a radial limiter is not operated in the inspection device.
FIG. 4B is a schematic view for illustrating the arm in a state in which the radial limiter is operated in the inspection device.
FIG. 5A is a perspective view for illustrating a pressure vessel provided with a guide.
FIG. 5B is a horizontal cross-sectional view of the pressure vessel provided with the guide.
FIG. 5C is a vertical cross-sectional view of the pressure vessel provided with the guide.
FIG. 6 is a functional block diagram of a controller included in the inspection system.
FIG. 7 is a flowchart for illustrating a flow of processes of an inspection method performed by the inspection system.
FIG. 8 is an explanatory perspective view for illustrating a configuration of an inspection device according to a modification example.

### Description of Embodiments

Now, with reference to the attached drawings, an embodiment of the present disclosure is described in detail. The dimensions, materials, and other specific numerical values represented in the embodiment are merely examples used for facilitating the understanding of the disclosure, and do not limit the present disclosure unless otherwise particularly noted. In addition, relative sizes of components illustrated in the drawings do not always accurately represent an actual magnitude relationship between the components. Elements having substantially the same functions and configurations herein and in the drawings are denoted by the same reference symbols to omit redundant description thereof. Further, illustration of elements with no direct relationship to the present disclosure is omitted.

An overview of an inspection system 100 according to one embodiment of the present invention is described. The inspection system 100 is, for example, a system including an inspection device 110 for performing various inspections on a pressure vessel 200 used in a plant such as a nuclear power plant or a chemical plant.

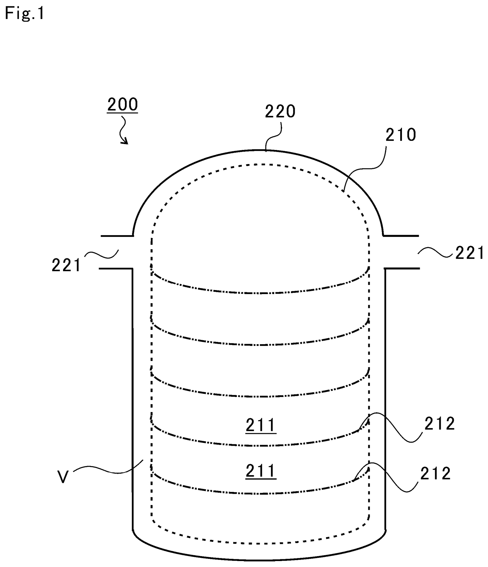

FIG. 1 is a perspective view for illustrating the pressure vessel 200 in the present disclosure, which is an inspection target. For example, the pressure vessel 200 is, as illustrated in FIG. 1, a double vessel including an inner vessel 210 and an outer vessel 220.

The inner vessel 210 is a cylindrical vessel including a body portion in which annular metal plates 211 are stacked in a vertical direction and boundaries 212 thereof are welded in a circumferential direction. The welded boundary 212 is hereinafter referred to as "welded joint 212."

The inner vessel 210 is placed inside of the outer vessel 220. Both the outer vessel 220 and the inner vessel 210 are vessels partly having a cylindrical shape. A space V is defined between the outer vessel 220 and the inner vessel 210 contained in the outer vessel 220. In addition, the outer vessel 220 is provided with at least one opening 221 connecting the space V and an outside of the pressure vessel 200. In the present disclosure, four openings 221 are provided every 90 degrees around a central axis of the outer vessel 220.

For example, in the inspection system 100, the inspection device 110 is placed in the space V from the outside of the pressure vessel 200 through the opening 221. The inspection device 110 performs an inspection targeting the pressure vessel 200 while moving in the space V. Specific examples of the inspection performed by the inspection device 110 include non-destructive inspections such as an ultrasonic flaw detection inspection, an X-ray transmission inspection, an eddy current flaw detection inspection, a penetration flaw detection inspection, a magnetic powder flaw detection inspection, and a visual inspection. In the present disclosure, the inspection system 100 for performing an ultrasonic flaw detection inspection on the welded joint 212 of the inner vessel 210 is described by taking a case in which the above-mentioned pressure vessel 200 is a double-structured pressure vessel used in a nuclear power plant as an example.

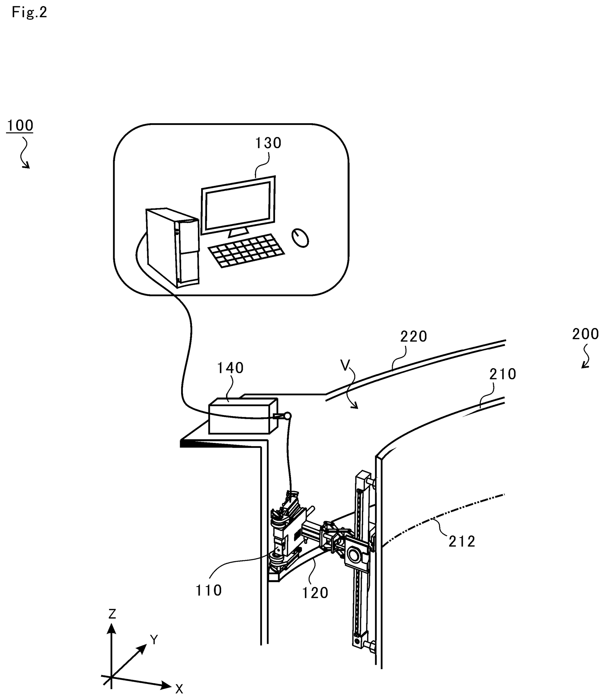

FIG. 2 is an explanatory view for illustrating a schematic relationship between devices forming the inspection system 100. In FIG. 2 and the subsequent figures of the present disclosure, an X-axis (radial direction), a Y-axis (circumferential direction, circumferential tangential direction), and a Z-axis (vertical direction) that intersect perpendicularly to each other are defined as illustrated with reference to the inspection device 110.

The inspection system 100 includes, as illustrated in FIG. 2, the above-mentioned inspection device 110, a guide 120 provided on the pressure vessel 200, a controller 130, and a carrier 140.

The guide 120 is a protrusion that protrudes radially inward from an inner surface of the outer vessel 220. The guide 120 extends in the circumferential direction of the outer vessel 220. For example, the guide 120 is provided at a position corresponding to the welded joint 212 of the inner vessel 210 on the inner surface of the outer vessel 220.

The inspection device 110 inspects the inner vessel 210 using, for example, ultrasonic waves. In the present disclosure, the inspection device 110 performs an ultrasonic flaw detection inspection on the welded joint 212 of the inner vessel 210. At least one wheel is provided on each of a vertical upper surface and a vertical lower surface of the inspection device 110. The inspection device 110 is placed in the space V of the pressure vessel 200 under a state in which the wheel on the vertical lower surface is in contact with a vertical upper surface of the guide 120 and the wheels on both surfaces parallel in the vertical direction are in contact with the inner surface of the outer vessel 220. Under this state, the inspection device 110 performs an ultrasonic flaw detection inspection on the welded joint 212 of the inner vessel 210 while moving in the circumferential direction on the inner surface of the outer vessel 220. In addition, the inspection device 110 is communicatively connected to the controller 130 (described later) via a cable.

The carrier 140 places the inspection device 110 in the space V of the pressure vessel 200. Each configuration of the inspection system 100 is described in detail below.

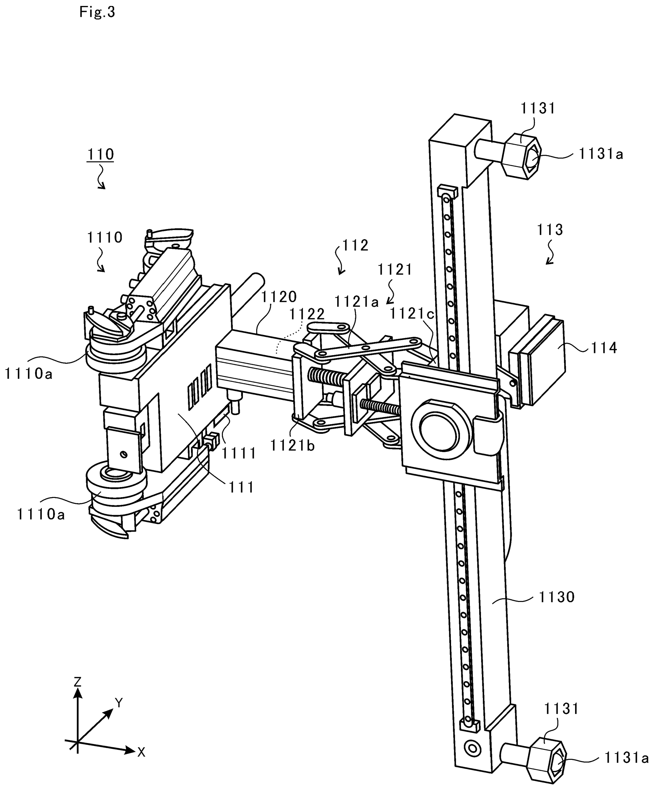

FIG. 3 is an explanatory perspective view for illustrating a configuration of the inspection device 110 included in the inspection system 100.

The inspection device 110 includes, as illustrated in FIG. 3, a main body 111, a first arm 112, a second arm 113, and an inspection unit 114.

The main body 111 has a rectangular parallelepiped shape. The main body 111 is provided with a travel mechanism 1110 and a position controller 1111.

The travel mechanism 1110 is a mechanism for the inspection device 110 to travel on the inner surface of the outer vessel 220. The travel mechanism 1110 includes wheels 1110a.

The wheels 1110a each have a cylindrical shape. The wheels 1110a are respectively provided on surfaces (XY planes) parallel in the vertical direction in the main body 111 such that the surfaces and circular surfaces of the wheels 1110a are parallel with each other. In the present disclosure, two wheels 1110a are provided on each of the surfaces parallel in the vertical direction in the main body 111. For example, a vertical upper surface of the main body 111 is opposed to a vertical lower surface of each wheel 1110a. In addition, a vertical lower surface of the main body 111 is opposed to a vertical upper surface of each wheel 1110a. In the main body 111, each of the wheels 1110a provided on the vertical upper surface and the vertical lower surface may be provided such that at least a part thereof projects in the radial direction or the circumferential direction from the vertical upper surface of the main body 111 and the vertical lower surface of the main body 111.

When the inspection device 110 is placed in the space V of the pressure vessel 200, outer peripheral surfaces of the wheels 1110a provided on the vertical upper surface and the vertical lower surface in the main body 111 are in contact with the inner surface of the outer vessel 220 (see FIG. 2). In addition, vertical lower surfaces of the wheels 1110a provided on the vertical lower surface in the main body 111 are in contact with the vertical upper surface of the guide 120 (see FIG. 2).

In addition, the wheels 1110a are driven by a drive device not shown in FIG. 3. The drive device for driving the wheels 1110a is, for example, a motor.

In the present disclosure, two wheels 1110a are provided on each of the vertical upper surface and the vertical lower surface in the main body 111. However, the number of the wheels 1110a to be provided is not particularly limited. In addition, in the present disclosure, the travel mechanism 1110 may include only the wheels 1110a, or may further include other configurations. Examples of the other configurations include a damper and a brake. For example, the damper absorbs vibrations generated in the wheels 1110a in accordance with unevenness of the inner surface of the outer vessel 220. In addition, the brake stops travel of the inspection device 110 by applying a braking force to the wheels 1110a.

The position controller 1111 is a mechanism for performing movement control of the inspection device 110 to a start position of the inspection. The position controller 1111 identifies a position of the inspection device 110 based on a reference position with which position information in the pressure vessel 200 is associated. In addition, the position controller 1111 performs movement control of the inspection device 110 to the inspection start position. Accordingly, the position controller 1111 includes a reference position detection sensor.

The reference position detection sensor is a sensor for detecting an index 123 representing the reference position provided on the guide 120 to be described later. A type of the reference position detection sensor is determined as appropriate in accordance with the index 123 provided on the guide 120. In the present disclosure, a notch is formed as the index 123 representing the reference position on the vertical upper surface of the guide 120. However, the index 123 is not limited to a notch. Other examples of the index 123 include a projection projecting vertically upward from the vertical upper surface of the guide 120. When a notch or a projection is provided as the index 123, a distance between the main body 111 and a position at which the index 123 is provided on the vertical upper surface of the guide 120 is different from a distance between the main body 111 and a position at which the index 123 is not provided on the vertical upper surface of the guide 120. Accordingly, in the present disclosure, a distance detection sensor for detecting a distance between the main body and the vertical upper surface of the guide 120 is used as the reference position detection sensor. The distance detection sensor may be an eddy current type distance detection sensor or an optical distance detection sensor. In addition, the reference position detection sensor may detect the reference position by a mechanical switch.

The position controller 1111 determines presence or absence of the index 123 based on the distance between the main body 111 and the vertical upper surface of the guide 120 detected by the reference position detection sensor. For example, when the distance between the main body 111 and the vertical upper surface of the guide 120 has changed by a predetermined value or more as compared with a distance detected previously, the position controller 1111 specifies that the index 123 is provided at a position at which the distance changed by the predetermined value or more is detected. The position controller 1111 identifies a position where the index 123 is provided as the reference position, and performs movement control of the inspection device 110 to the inspection start position with using the reference position as a starting point.

The first arm 112 has one end connected to a surface on the inner vessel 210 side among surfaces (XZ planes) parallel in the circumferential tangential direction of the main body 111. The other end of the first arm 112 is connected to the second arm 113 (described later). The first arm 112 includes a first support 1120, a radial limiter 1121, and an actuator 1122. The first support 1120 is provided on the one end side. The radial limiter 1121 is provided on the other end side. The actuator 1122 operates the radial limiter 1121. The radial limiter 1121 is connected to the second arm 113 to be described later. In the present disclosure, the radial limiter 1121 has a pantograph-type configuration. The radial limiter 1121 having the pantograph-type configuration is described below.

The radial limiter 1121 includes a pantograph 1121a formed of pantograph arms intersecting in an XY plane or an XZ plane. In the present disclosure, the radial limiter 1121 includes two pantographs 1121a including pantograph arms intersecting in the XY plane. An end on the outer vessel 220 side of each pantograph 1121a is connected to the first support 1120 through intermediation of a base 1121b. An end on the inner vessel 210 side of each pantograph 1121a is connected to the second arm 113 through intermediation of a support base 1121c.

The actuator 1122 operates the radial limiter 1121. For example, the actuator 1122 is provided inside the first support 1120 of the first arm 112. The actuator 1122 reduces a distance between one ends of the pantograph arms at ends on an outer surface side of the outer vessel 220 in the pantograph 1121a. Accordingly, the pantograph 1121a extends in the radial direction, and the first arm 112 extends in the radial direction. Extension of the first arm 112 is described in detail later with different figures.

The second arm 113 includes a second support 1130 and a ball plunger 1131. For example, the second arm 113 is provided with the ball plungers 1131 respectively at both ends of the second support 1130. In the space V of the pressure vessel 200, the second arm 113 is placed such that a longitudinal direction of the second support 1130 corresponds to the vertical direction. That is, the second support 1130 is placed such that its longitudinal direction is positioned perpendicular to the welded joint 212 of the inner vessel 210 in the space V of the pressure vessel 200 (see FIG. 2). An area around a middle part of the second support 1130 is connected to the other end of the first arm 112. In addition, on the second support 1130, the inspection unit 114 (described later) is provided so as to be movable along the second support 1130. For example, the second support 1130 is provided with a slide mechanism. By operating the slide mechanism, the inspection unit 114 can move (scan) in the vertical direction within a range from one end to the other end along the longitudinal direction of the second support 1130.

The ball plunger 1131 includes a spring (not shown) and a ball 1131a inside a main body thereof. In the main body of the ball plunger 1131, the spring and the ball 1131a are placed in this order from an end on the second support 1130 side of the ball plunger 1131. The ball 1131a is provided so as to be rotatable. In addition, the ball 1131a may be provided such that a part thereof projects inward in the radial direction.

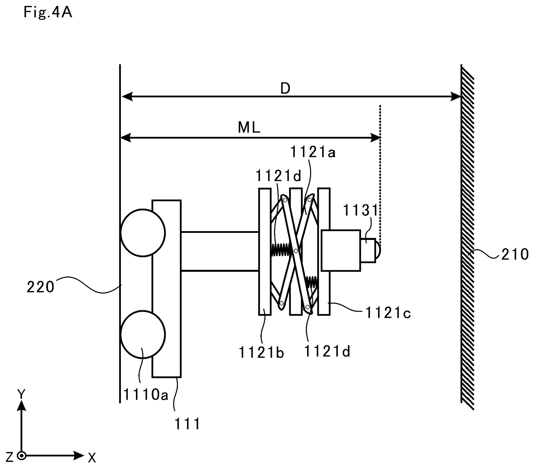

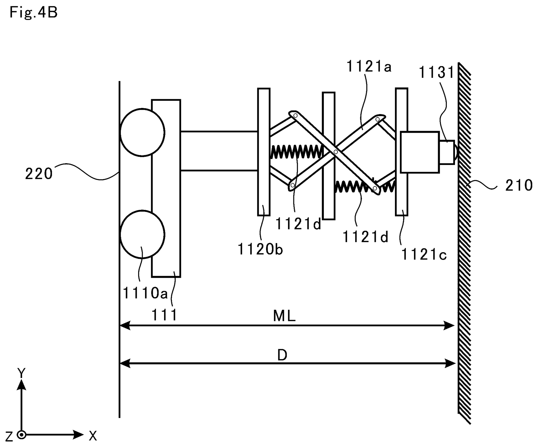

The above-mentioned first arm 112 and second arm 113 may hereinafter be collectively referred to as "arm." An example of an operation of the arm in the inspection device 110 is described below. FIG. 4A and FIG. 4B are views for illustrating the operation of the arm including the radial limiter 1121 having a pantograph-type configuration. In addition, FIG. 4A and FIG. 4B are views for illustrating the inspection device 110 as viewed from vertically above in FIG. 2 in a simplified manner. FIG. 4A is a schematic view for illustrating the arm in a state in which the radial limiter 1121 is not operated. FIG. 4B is a schematic view for illustrating the arm in a state in which the radial limiter 1121 is operated.

When the radial limiter 1121 is not operated, the first arm 112 is in a state in which the pantograph 1121a is not extended as illustrated in FIG. 4A. An elastic body 1121d provided between the base 1121b and the support base 1121c prevents the pantograph 1121a from being excessively contracted when the radial limiter 1121 is not operated. When the radial limiter 1121 is not operated, a device length ML that is a length from the inner surface of the outer vessel 220 to an end on the inner vessel 210 side of the ball plunger 1131 is smaller than a distance D from the inner surface of the outer vessel 220 to the outer surface of the inner vessel 210. Accordingly, the inspection device 110 can move in the radial direction in the space V of the pressure vessel 200.

Under a state in which the pantograph 1121a is not extended, the device length ML may be smaller than a distance from a radially inner surface of the guide 120 to the outer surface of the inner vessel 210. Accordingly, the inspection device 110 can pass between the guide 120 and the outer surface of the inner vessel 210. As a result, the inspection device 110 can freely move in the vertical direction from a vertical lower surface to an upper surface of the outer vessel 220 in the space V of the pressure vessel 200.

Accordingly, when the radial limiter 1121 is not operated, the inspection device 110 can move in the vertical direction and the radial direction in the space V of the pressure vessel 200. When the radial limiter 1121 is operated from a state in which the inspection device 110 is placed in contact with the vertical upper surface of the guide 120 and the inspection device 110 is positioned in the vertical direction, the actuator 1122 extends the pantograph 1121a radially inward. As a result, as illustrated in FIG. 4B, the ball 1131a of the ball plunger 1131 of the second arm 113 is pressed against the outer surface of the inner vessel 210. At this time, the device length ML corresponds to the distance D from the inner surface of the outer vessel 220 to the outer surface of the inner vessel 210.

When the radial limiter 1121 is operated and the device length ML corresponds to the distance D, the inspection device 110 is brought into a braced state between the outer surface of the inner vessel 210 and the inner surface of the outer vessel 220. With such a positional relationship, movement in the radial direction of the inspection device 110 in the pressure vessel 200, particularly movement of the inspection device 110 radially inward, can be limited. Meanwhile, the inspection device 110 can move in the circumferential direction by rotating the wheels 1110a and the ball 1131a of the ball plunger 1131.

When the operation of the radial limiter 1121 is canceled from the state in which the inspection device 110 is braced between the outer surface of the inner vessel 210 and the inner surface of the outer vessel 220, an elastic force acts in a direction in which the elastic body 1121d is contracted, that is, a direction in which the pantograph 1121a is contracted. The pantograph 1121a is contracted by this elastic force, and thus the device length ML becomes smaller than the distance D. Accordingly, a limit on movement of the inspection device 110 radially inward is canceled by canceling the operation of the radial limiter 1121. As a result, the inspection device 110 can be recovered from the space V of the pressure vessel 200.

In addition, even when electric power to the inspection device 110 is cut due to a failure or the like, the limit on movement of the inspection device 110 radially inward is canceled because the elastic force acts in the direction in which the elastic body 1121d is contracted, accompanying stop of operation of the actuator 1122. Accordingly, even when electric power to the inspection device 110 is cut due to a failure or the like, the inspection device 110 can be recovered from the space V of the pressure vessel 200 because the limit on movement in the radial direction of the inspection device 110 is canceled.

When the pantograph 1121a is contracted and the device length ML has become smaller than the distance from the radially inner surface of the guide 120 to the outer surface of the inner vessel 210, the inspection device 110 can freely move in the vertical direction from the vertical lower surface to the upper surface of the outer vessel 220 in the space V of the pressure vessel 200. Accordingly, with the radial limiter 1121 being canceled, the inspection device 110 can move from the guide 120 at which the inspection device 110 is currently positioned to another guide 120 positioned vertically above or vertically below in the pressure vessel 200.

The inspection unit 114 inspects the inner vessel 210 as an inspection target. For example, the inspection unit 114 is an ultrasonic sensor for performing an ultrasonic flaw detection inspection on the welded joint 212 of the inner vessel 210. In this case, the inspection unit 114 transmits ultrasonic waves to the welded joint 212, and receives ultrasonic waves reflected at the welded joint 212. The inspection system 100 analyzes the ultrasonic waves received by the inspection unit 114, and inspects whether or not a defect such as a scratch has occurred in the welded joint 212. Accordingly, the inspection unit 114 includes a transmitter and a receiver. The transmitter includes a transducer for transmitting ultrasonic waves. The receiver includes a transducer for receiving ultrasonic waves. The inspection unit 114 scans in the vertical direction within the range from the one end to the other end in the longitudinal direction of the second support 1130 in the second arm 113. Accordingly, the inspection unit 114 can inspect a wide range in the vicinity of the welded joint 212 that is the inspection target.

Although the example in which the transmitter of ultrasonic waves and the receiver of ultrasonic waves are separately provided in the inspection unit 114 is described in the present disclosure, the present disclosure is not limited thereto. A transmitting and receiving unit of ultrasonic waves in which the transmitter of ultrasonic waves and the receiver of ultrasonic waves are integrated may be provided in the inspection unit 114.

In addition, although an ultrasonic sensor including a transmitter and a receiver each including a transducer is taken as an example as the inspection unit 114 in the present disclosure, the present disclosure is not limited thereto. The inspection unit 114 may be an ultrasonic sensor in which a magnet capable of electromagnetically transmitting and receiving ultrasonic waves and a coil are combined.

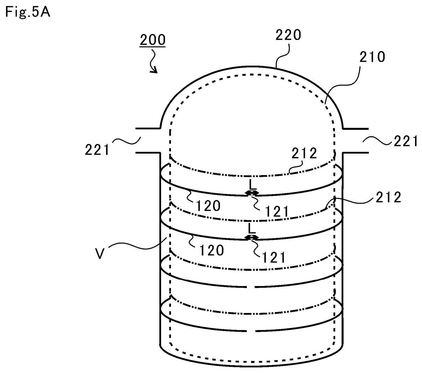

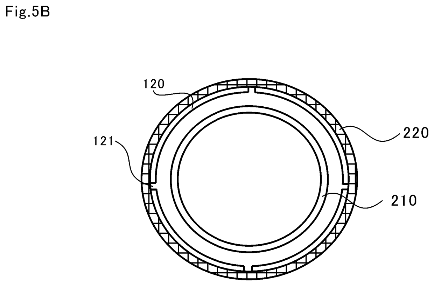

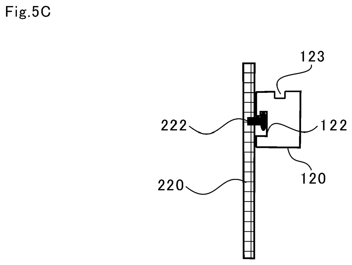

The guide 120 assists travel of the inspection device 110 in the space V of the pressure vessel 200. FIG. 5A is a perspective view for illustrating the pressure vessel 200 provided with the guides 120. FIG. 5B is a horizontal cross-sectional view of FIG. 5A. FIG. 5C is a part of a vertical cross-sectional view of FIG. 5A.

As illustrated in FIG. 5A, the guide 120 extends in the circumferential direction of the outer vessel 220 on the inner surface of the outer vessel 220. For example, the guide 120 extends along the welded joint 212 of the inner vessel 210. When the inspection device 110 is placed in the space V of the pressure vessel 200, the upper surface of the guide 120 is in contact with the vertical lower surface of the wheel 1110a positioned on the vertical lower surface of the inspection device 110 illustrated in FIG. 3. The inspection device 110 is pressed against the upper surface of the guide 120 by gravity. Accordingly, vertically downward movement of the inspection device 110 is limited. As a result, when the inspection device 110 travels on the inner surface of the outer vessel 220, horizontal travel along the welded joint 212 becomes possible without being affected by gravity. In contrast, vertically upward movement of the inspection device 110 illustrated in FIG. 3 is not limited. Accordingly, when an inspection has been completed or when a failure has occurred in the inspection device 110, the inspection device 110 can be moved to the opening 221 and easily recovered.

As illustrated in FIG. 2, in the space V of the pressure vessel 200, the inspection device 110 is placed such that the welded joint 212 is positioned around the middle part of the second support 1130 of the second arm 113. Accordingly, the guide 120 in contact with the vertical lower surface of the wheel 1110a positioned on the vertical lower surface of the inspection device 110 is provided below the welded joint 212 to be inspected by the inspection device 110 during travel. For example, the guide 120 is provided vertically below the welded joint 212 by a length of about half of a vertical width of the main body 111. Accordingly, the welded joint 212 is positioned within a scanning range of the inspection unit 114 in the inspection device 110 during travel. In addition, the inspection device 110 can inspect the vertical width of the welded joint 212 in a wide range. In addition, a problem such as contact of the ball plunger 1131 with the welded joint 212 does not occur.

A material for forming the guide 120 is determined as appropriate in accordance with an environment of the space V. In the present disclosure, the environment of the space V is a high-temperature and high-radiation environment because the pressure vessel 200 is a double vessel used in a nuclear power plant. Accordingly, the guide 120 may be made of a metal such as iron, lead, or stainless steel. The guide 120 made of a metal thermally expands by being exposed to the high-temperature environment of the space V. Accordingly, in the inspection system 100 according to the present disclosure, the guide 120 has at least one gap 121 as illustrated in FIG. 5A and FIG. 5B. The gap 121 absorbs thermal expansion of the guide 120. Accordingly, deformation of the guide 120 accompanying thermal expansion is suppressed. In addition, the gap 121 has a length L that does not interfere with travel of the inspection device 110 illustrated in FIG. 3 in the circumferential direction of the outer vessel 220. For example, the length L of the gap 121 is shorter than a diameter of the wheel 1110a of the inspection device 110. Accordingly, the wheel 1110a of the inspection device 110 does not get stuck and become unable to move in the gap 121 even under a state in which the guide 120 is not thermally expanded.

In addition, as illustrated in FIG. 5C, the guide 120 is not completely fixed to the inner surface of the outer vessel 220. For example, a surface of the guide 120 in contact with the inner surface of the outer vessel 220 has a recess 122 corresponding to a pin 222 projecting from the inner surface of the outer vessel 220. The guide 120 is provided on the inner surface of the outer vessel 220 by hooking the recess 122 to the pin 222. The guide 120 allows slight deformation due to thermal expansion because the guide 120 is not completely fixed to the inner surface of the outer vessel 220. Accordingly, the guide 120 can suppress deformation due to thermal expansion more than the case of being completely fixed to the inner surface of the outer vessel 220. In addition, the guide 120 can be easily replaced even when the guide 120 has been deformed or damaged by thermal expansion.

In addition, the guide 120 is provided with the index 123 representing the reference position (reference position for identifying the position of the inspection device 110). For example, the index 123 is a notch. The notch serving as the index 123 is different from the above-mentioned gap 121.

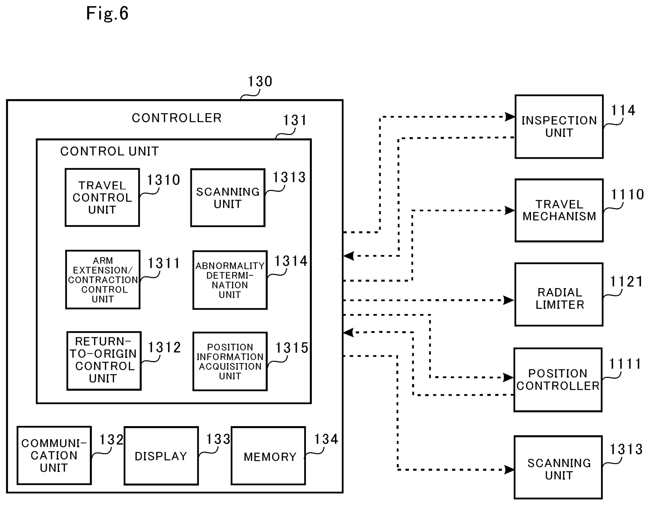

The controller 130 controls the inspection device 110. For example, the controller 130 controls at least travel of the inspection device 110. The controller 130 is placed outside the pressure vessel 200. For example, the controller 130 is placed in a shielded room provided in the vicinity of the opening 221 of the pressure vessel 200 because the controller 130 is connected to the inspection device 110 with a cable for wired communication. FIG. 6 is a functional block diagram of the controller 130 included in the inspection system 100. In FIG. 6, broken-line arrows indicate signal flows. As illustrated in FIG. 6, the controller 130 includes a control unit 131, a communication unit 132, a display 133, and a memory 134.

The control unit 131 is formed of a semiconductor integrated circuit including a central processing unit (CPU). The control unit 131 reads a program, parameters, and the like for operating the CPU from a read-only memory (ROM). The control unit 131 manages and controls the entire inspection device 110 in cooperation with a random access memory (RAM) as a work area and other electronic circuits. The control unit 131 includes a travel control unit 1310, an arm extension/contraction control unit 1311, a return-to-origin control unit 1312, a scanning unit 1313, an abnormality determination unit 1314, and a position information acquisition unit 1315.

The travel control unit 1310 controls travel of the inspection device 110 by controlling the travel mechanism 1110. For example, the travel control unit 1310 can control rotation and stop of the wheels 1110a and a rotation direction of the wheels 1110a by controlling the drive device of the wheels 1110a. Accordingly, the inspection device 110 can advance in any circumferential direction or stop on the inner surface of the outer vessel 220.

The arm extension/contraction control unit 1311 controls extension and contraction of the arm of the inspection device 110. For example, the arm extension/contraction control unit 1311 controls extension and contraction of the pantograph 1121a by controlling the actuator 1122 in the radial limiter 1121 of the first arm 112.

The return-to-origin control unit 1312 performs movement control such that the inspection device 110 moves to an inspection start position (origin). For example, the return-to-origin control unit 1312 detects the index 123 representing the reference position provided on the guide 120 by the reference position detection sensor of the position controller 1111 while causing the inspection device 110 to travel by controlling the travel mechanism 1110. The return-to-origin control unit 1312 performs movement control of the inspection device 110 to the inspection start position after identifying the position of the inspection device 110 in the pressure vessel 200 based on position information associated with the position (reference position) at which the index 123 is detected.

The scanning unit 1313 causes the inspection unit 114 to scan in the vertical direction. For example, the scanning unit 1313 causes the inspection unit 114 to scan in the vertical direction by operating the slide mechanism provided on the second support 1130. More specifically, the scanning unit 1313 causes the inspection unit 114 to scan in the vertical direction within the range from the one end to the other end along the longitudinal direction of the second support 1130.

The abnormality determination unit 1314 determines presence or absence of an abnormality in the inspection target. An abnormality is a defect such as a scratch or damage. The abnormality determination unit 1314 receives an inspection result from the inspection unit 114 and determines presence or absence of an abnormality in the inspection target based on the inspection result. For example, the inspection unit 114 performs an ultrasonic flaw detection inspection on the welded joint 212 of the inner vessel 210. In this case, the abnormality determination unit 1314 acquires information indicating ultrasonic waves received by the receiver of the inspection unit 114 as an inspection result. The abnormality determination unit 1314 determines presence or absence of an abnormality such as a scratch in the welded joint 212 based on the acquired information indicating ultrasonic waves.

The position information acquisition unit 1315 acquires position information of the inspection device 110 in the pressure vessel 200. For example, the inspection device 110 is provided with an encoder for detecting a movement amount of the inspection device 110. In this case, the position information acquisition unit 1315 acquires information indicating the movement amount of the inspection device 110 from an inspection start position from the encoder to acquire the position information of the inspection device 110 in the pressure vessel 200.

The position information acquisition unit 1315 may further acquire position information of the inspection unit 114 in the second support 1130. For example, the second arm 113 is provided with an encoder for detecting a movement amount of the inspection unit 114. The position information acquisition unit 1315 acquires the position information of the inspection unit 114 in the second support 1130 based on information indicating the movement amount of the inspection unit 114 acquired from the encoder.

The communication unit 132 communicates with the inspection device 110 via a cable. For example, the communication unit 132 transmits a signal for controlling each configuration of the inspection device 110. In addition, the communication unit 132 receives an inspection result from the inspection device 110.

The display 133 displays various types of information. For example, the position information of the inspection device 110 acquired by the position information acquisition unit 1315, the inspection result received from the inspection unit 114, presence or absence of an abnormality in the inspection target, and the like are displayed.

The memory 134 includes a ROM, a RAM, a flash memory, an HDD, and the like. The memory 134 stores programs and various types of data to be used by the control unit 131. For example, the memory 134 stores in advance position information of the index 123 representing the reference position, inspection results during normal operation, and the like. In addition, the memory 134 stores the inspection result received from the inspection unit 114.

The carrier 140 illustrated in FIG. 2 is a device for carrying the inspection device 110. For example, the carrier 140 carries the inspection device 110 into the space V from the outside of the pressure vessel 200 through the opening 221 of the outer vessel 220. More specifically, the carrier 140 carries it from the outside of the pressure vessel 200 to the opening 221 of the outer vessel 220. The carrier 140 suspends the inspection device 110 from the opening 221 through use of a cable or a dedicated wire connecting the inspection device 110 and the controller 130. The carrier 140 suspends the inspection device 110 vertically downward in the space V, and places the inspection device 110 on the vertical upper surface of the desired guide 120. In addition, the carrier 140 lifts the inspection device 110 positioned on the vertical upper surface of the guide 120 up to the opening 221 by winding the cable connecting the inspection device 110 and the controller 130. The carrier 140 carries the inspection device 110 from the opening 221 to the outside of the pressure vessel 200. In the present disclosure, a telescopic manipulator is used as the carrier 140. The telescopic manipulator extends and contracts to carry the inspection device 110 between the outside of the pressure vessel 200 and the opening 221.

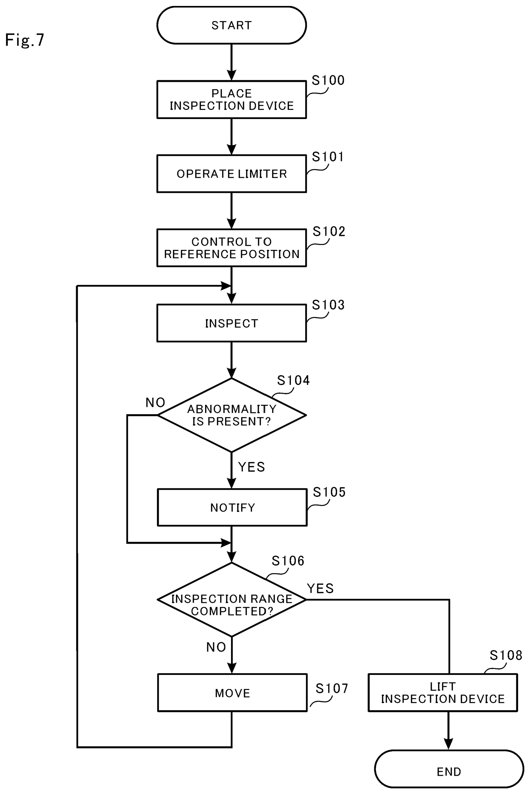

Next, an inspection method to be performed by the inspection system 100 is described. The inspection method is an inspection method using the inspection device 110. FIG. 7 is a flowchart for illustrating a flow of processes of the inspection method performed by the inspection system 100. As illustrated in FIG. 7, the inspection method includes an installation process S100, a radial limiting process S101, a return-to-origin process S102, an inspection process S103, an abnormality determination process S104, a notification process S105, a completion determination process S106, a movement process S107, and a recovery process S108. Each process is described below.

First, the carrier 140 performs the installation process S100 of putting the inspection device 110 into the space V of the pressure vessel 200 and placing the inspection device 110 on a desired guide 120. In the installation process S100, the carrier 140 carries the inspection device 110 to the opening 221. After that, the carrier 140 suspends the inspection device 110 from the opening 221 through use of a cable or a dedicated wire connecting the inspection device 110 and the controller 130, and places the inspection device 110 such that the inspection device 110 is in contact with the vertical upper surface of the guide 120.

Next, the arm extension/contraction control unit 1311 performs the radial limiting process S101 of limiting movement in the radial direction of the inspection device 110 placed on the guide 120. In the radial limiting process S101, the arm extension/contraction control unit 1311 controls the radial limiter 1121 to bring the inspection device 110 into a braced state between the outer surface of the inner vessel 210 and the inner surface of the outer vessel 220. Accordingly, movement in the radial direction of the inspection device 110, particularly movement of the inspection device 110 radially inward, can be limited. As a result, the inspection device 110 can be prevented from falling from the guide 120.

Next, the return-to-origin control unit 1312 performs the return-to-origin process S102 of performing movement control of the inspection device 110 to the inspection start position. In the return-to-origin process S102, the return-to-origin control unit 1312 causes the inspection device 110 to travel in the circumferential direction by controlling the travel mechanism 1110. In addition, the return-to-origin control unit 1312 detects the index 123 representing the reference position provided on the guide 120 through use of the reference position detection sensor of the position controller 1111. The return-to-origin control unit 1312 identifies the position of the inspection device 110 in the pressure vessel 200 based on position information associated with the position (reference position) at which the index 123 is detected, and then performs movement control of the inspection device 110 to the inspection start position.

Next, the control unit 131 performs the inspection process S103 of inspecting the inspection target. When an ultrasonic flaw detection inspection is performed on the welded joint 212, in the inspection process S103, the control unit 131 controls the transmitter of the inspection unit 114 to transmit ultrasonic waves from the transmitter toward the welded joint 212. The receiver of the inspection unit 114 receives ultrasonic waves reflected at the welded joint 212. In addition, the scanning unit 1313 of the control unit 131 moves the inspection unit 114 in the vertical direction by controlling the slide mechanism of the second support 1130. In the inspection process S103, a set of flow including transmission and reception of ultrasonic waves in the inspection unit 114 and movement of the inspection unit 114 in the vertical direction is repeated over the entire width in the vertical direction of the welded joint 212.

In addition, in the inspection process S103, the inspection unit 114 transmits the inspection result to the abnormality determination unit 1314. For example, the inspection unit 114 may transmit the inspection result to the abnormality determination unit 1314 every time the set of flow including transmission and reception of ultrasonic waves to and from the welded joint 212 and movement of the inspection unit 114 in the vertical direction is completed. In addition, the inspection unit 114 may collectively transmit the inspection results to the abnormality determination unit 1314 after the set of flow including transmission and reception of ultrasonic waves to and from the welded joint 212 and movement of the inspection unit 114 in the vertical direction has been repeated over the entire width in the vertical direction of the welded joint 212. In addition, the inspection unit 114 may transmit the inspection result to the abnormality determination unit 1314 at appropriate times during transmission and reception of ultrasonic waves to and from the welded joint 212 or during movement of the inspection unit 114 in the vertical direction.

Next, the abnormality determination unit 1314 performs the abnormality determination process S104 of determining presence or absence of an abnormality in the inspection target based on the inspection result received from the inspection unit 114. In the abnormality determination process S104, the abnormality determination unit 1314 determines presence or absence of an abnormality in the inspection target by comparing the inspection result received from the inspection unit with the inspection results during normal operation stored in advance in the memory 134. When the abnormality determination unit 1314 determines that the inspection target has an abnormality (YES in S104), the process proceeds to the notification process S105. In contrast, when the abnormality determination unit 1314 determines that the inspection result has no abnormality (NO in S104), the process proceeds to the completion determination process S106.

In the present disclosure, although the abnormality determination unit 1314 determines whether or not the inspection result has an abnormality based on comparison with the inspection results during normal operation, the present disclosure is not limited thereto. For example, the abnormality determination unit 1314 may determine that the inspection target has an abnormality when the inspection result received from the inspection unit 114 indicates an abnormal value.

In the present disclosure, the example in which the abnormality determination unit 1314 determines presence or absence of an abnormality in the inspection target based on the inspection result received from the inspection unit 114 has been given, but the present disclosure is not limited thereto. For example, a person may determine presence or absence of an abnormality in an inspection target based on an inspection result received from the inspection unit 114 in place of the abnormality determination unit 1314. Specific examples of the person who determines presence or absence of an abnormality in an inspection target include an operator, and a manager of the pressure vessel 200.

When it is determined that the inspection target has an abnormality (YES in S104), the control unit 131 performs the notification process S105 of notifying the operator or the manager of the pressure vessel 200 of this abnormality. In the notification process S105, the control unit 131 displays a display image indicating that it has been determined that the inspection target has an abnormality on the display 133.

The control unit 131 may specify a position at which it is determined that the inspection target has an abnormality. For example, the control unit 131 specifies the position at which it is determined that the inspection target has an abnormality through use of an encoder. In this case, the controller 130 specifies the position at which it is determined that the inspection target has an abnormality by adding information indicating the movement amount, detected by the encoder, from the inspection start position to a position at which the inspection result of being determined to have an abnormality is acquired to position information of the inspection start position stored in advance in the memory 134. The control unit 131 may notify the operator or the manager of the pressure vessel 200 of position information of a position at which presence of an abnormality has been determined together with the fact that it has been determined that the inspection target has an abnormality. Accordingly, the operator or the manager of the pressure vessel 200 can also grasp the position at which presence of an abnormality has been determined. The control unit 131 stores, in the memory 134, the position information of the position at which the presence of an abnormality has been determined in the inspection target in association with an inspection result that is a basis for the determination or an inspection time.

Next, the control unit 131 performs the completion determination process S106 of determining whether or not an inspection of a predetermined inspection range has been completed. As a result, when it is determined that the inspection of the inspection range has not been completed (NO in S106), the process proceeds to the movement process S107. In contrast, when it is determined that the inspection of the inspection range has been completed (YES in S106), the process proceeds to the recovery process S108.

When it is determined that the inspection of the inspection range has not been completed (NO in S106), the travel control unit 1310 performs the movement process S107 of moving the inspection device 110 in the circumferential direction. In the movement process S107, the travel control unit 1310 moves the inspection device 110 from a first position at which the inspection process S103 has been performed to a second position by controlling the travel mechanism 1110. The second position is a position different from the first position, and is a position moved from the first position in the circumferential direction of the pressure vessel 200. Then, the process returns to the inspection process S103.

When it is determined that the inspection of the inspection range has been completed (YES in S106), the arm extension/contraction control unit 1311 and the carrier 140 perform the recovery process S108 of recovering the inspection device 110 from the pressure vessel 200. In the recovery process S108, the arm extension/contraction control unit 1311 stops the operation of the radial limiter 1121 to cancel the limit on the movement in the radial direction of the inspection device 110. The carrier 140 lifts the inspection device 110 up to the opening 221 by winding the cable or the dedicated wire connecting the inspection device 110 and the controller 130, and recovers the inspection device 110 from the opening 221. Accordingly, the process of the inspection method is completed.

As described above, the inspection system 100 according to the present disclosure includes the inspection device 110. The inspection device 110 inspects the welded joint 212 of the inner vessel 210 as a target while traveling on the inner surface of the outer vessel 220 under a state of being in contact with the vertical upper surface of the guide 120 extending on the inner surface of the outer vessel 220.

In the inspection system 100 according to the present disclosure, the inspection device 110 adopts a configuration of inspecting the welded joint 212 of the inner vessel 210 while traveling on the inner surface of the outer vessel 220 under a state of being in contact with the vertical upper surface of the guide 120 provided on the inner surface of the outer vessel 220. Accordingly, with the inspection device 110 having no relationship of being press-fitted to the guide 120, the inspection device 110 can be easily placed in the pressure vessel 200 by remote operation. In addition, the inspection device 110 can travel horizontally along the welded joint 212 without being affected by gravity because the guide 120 limits vertically downward movement of the inspection device 110.

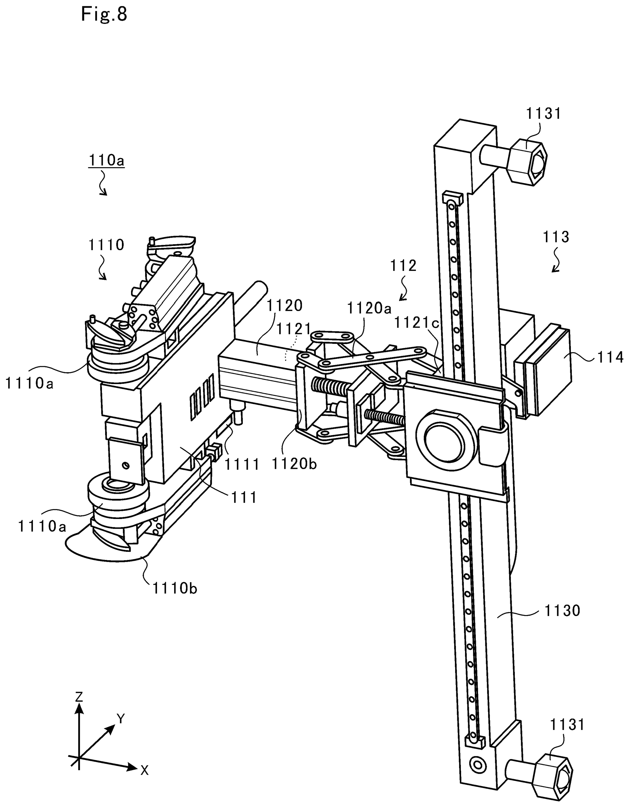

A modification example of the inspection device 110 (hereinafter referred to as "inspection device 110a") is described with reference to FIG. 8. FIG. 8 is an explanatory perspective view for illustrating a configuration of the inspection device 110a. For convenience of the description, members having the same functions as those described in the above-mentioned inspection device 110 are denoted by the same reference symbols, and description thereof is not repeated.

As illustrated in FIG. 8, the inspection device 110a is different from the inspection device 110 in that a plate-like member 1110b is provided on the wheel 1110a. The plate-like member 1110b is provided on a vertical lower surface of the wheel 1110a provided on the vertical lower surface of the main body 111. Although a length of the plate-like member 1110b is not particularly limited, the length may be a length that allows the inspection device 110a to travel in the circumferential direction of the pressure vessel 200 without being interfered with by the gap 121. For example, the length of the plate-like member 1110b is longer than the length L of the gap 121.

An embodiment of the present disclosure has been described above with reference to the attached drawings, but, needless to say, the present disclosure is not limited to the above-mentioned embodiment. It is apparent that those skilled in the art may arrive at various alternations and modifications within the scope of the claims, and those examples are construed as naturally falling within the technical scope of the present disclosure.

The present disclosure can contribute to, for example, Goal 7 "Ensure access to affordable, reliable, sustainable and modern energy for all" and Goal 13 "Take urgent action to combat climate change and its impacts" in Sustainable Development Goals (SDGs).

### Reference Signs List

100: inspection system, 110: inspection device, 111: main body, 112: first arm (arm), 1121: radial limiter, 113: second arm (arm), 114: inspection unit, 120: guide, 121: gap, 122: recess, 123: index, 130: controller, 131: control unit, 200: pressure vessel

## Claims

1. An inspection device to be placed between an inner vessel and an outer vessel of a double vessel, the inner vessel and the outer vessel partly having a cylindrical shape, the inspection device comprising:
an inspection unit that inspects the inner vessel as a target;
a main body that is provided with a wheel to travel; and
an arm that includes a radial limiter for limiting movement of the main body in a radial direction of the double vessel,
wherein, under a state in which a surface of the main body is in contact with a vertical upper surface of a guide extending in a circumferential direction of the outer vessel, the inspection device travels in the circumferential direction on an inner surface of the outer vessel.

2. The inspection device according to claim 1, wherein the arm includes:
a first arm extending from the main body in a radial direction of the inner vessel; and
a second arm connected to the first arm, the second arm being provided with the inspection unit such that the inspection unit is movable in a vertical direction.

3. The inspection device according to claim 2, wherein the first arm limits the movement of the main body in the radial direction by pressing the second arm against an outer surface of the inner vessel.

4. The inspection device according to claim 2,
wherein the first arm includes an elastic body, and
wherein a limit on the movement of the main body in the radial direction is canceled by an elastic force based on the elastic body.

5. The inspection device according to claim 1, further comprising a position controller that controls the inspection device to a start position of an inspection,
wherein the position controller detects an index representing a reference position provided on the guide, and identifies the reference position as a position of the inspection device in the double vessel.

6. The inspection device according to claim 1,
wherein at least one gap is formed in the guide, and
wherein the gap has a length that does not interfere with travel of the inspection device in the circumferential direction.

7. An inspection system, comprising:
the inspection device of any one of claims 1 to 6;
the guide extending in the circumferential direction of the outer vessel; and
a controller that controls travel of the inspection device.

8. An inspection method using an inspection device to be placed between an inner vessel and an outer vessel of a double vessel, the inner vessel and the outer vessel partly having a cylindrical shape,
the inspection device including:
an inspection unit that inspects the inner vessel as a target;
a main body that is provided with a wheel to travel; and
an arm that includes a radial limiter for limiting movement of the main body in a radial direction of the double vessel,
the inspection method comprising the processes of:
suspending the inspection device to place the inspection device such that a surface of the main body is in contact with a vertical upper surface of a guide extending in a circumferential direction of the outer vessel;
limiting movement of the inspection device in the radial direction by operating the radial limiter;
causing the inspection device to travel in the circumferential direction by driving the wheel;
performing an inspection on the inner vessel as the target; and
stopping the radial limiter to lift the inspection device.

9. The inspection method according to claim 8, wherein, under a state in which the inspection device is in contact with the guide, vertically downward movement of the inspection device is limited, but vertically upward movement of the inspection device is free of being limited.
